# EUROPÄISCHE PATENTANMELDUNG

(11) **EP 4 407 114 A1**
(43) Veröffentlichungstag der Anmeldung: **31.07.2024**
(21) Anmeldenummer: 23153652.5
(22) Anmeldetag: 27.01.2023
(51) Int. Cl.: E04D 11/00, A01G 9/033

(54) **RETENTIONSMODUL UND ANORDNUNG VON RETENTIONSMODULEN**

(71) Anmelder: Climagrün GmbH, 39100 Bozen (IT)
(72) Erfinder: KORNPROBST, Klaus, 39100 Bozen (IT); NIEDERMAYR, Matthias, 39057 Eppan an der Weinstraße (IT); TROJER, Thomas, 39058 Sarntal (IT)
(74) Vertreter: Torggler & Hofmann Patentanwälte - Innsbruck

(57) **Zusammenfassung**

Retentionsmodul (1) zur Beabstandung einer Auflage (16), insbesondere einer Dachbegrünung, Kiesfläche und/oder Geh- und/oder Fahrbelag, von einer Gebäudeoberfläche (17), wobei das Retentionsmodul (1) mindestens eine der Auflage (16) zugewandte, insbesondere wasserdurchlässige, Auflagefläche (2) zum Auflegen der Auflage (16) aufweist, wobei eine Mehrzahl an Abstandhaltern (3) von der mindestens einen Auflagefläche (2) in eine von der Auflage (16) abgewandten Richtung absteht, vorzugweise wobei die Auflagefläche (2) von einem, bevorzugt durchgängigen und/oder rechteckigen, Rahmen (7) umgeben ist.

## Beschreibung

Die Erfindung betrifft ein Retentionsmodul zur Beabstandung einer Auflage, insbesondere einer Dachbegrünung, Kiesfläche und/oder Geh- und/oder Fahrbelag, von einer Gebäudeoberfläche. Des Weiteren betrifft die Erfindung eine Anordnung aus mindestens zwei Retentionsmodulen und eine Oberflächenkonstruktion mit der Anordnung aus mindestens zwei Retentionsmodulen.

Oberflächenkonstruktionen mit einer Auflage, insbesondere einer Dachbegrünung, einer Kiesfläche und/oder einem Geh- und/oder Fahrbelag, welche auf einer Gebäudeoberfläche aufgebaut werden, sind aus dem Stand der Technik bekannt. Als Oberflächenkonstruktion wird beispielsweise ein Gründach, ein Kiesdach oder ein Aufbau mit Geh- und/oder Fahrwegen auf einer Gebäudeoberfläche samt ihren Bestandteilen wie Substrat für eine Vegetation oder eine Tragschicht für Geh- und/oder Fahrwege bezeichnet.

Auf einer gegebenenfalls vorhandenen Schutzschicht, welche die Oberflächenkonstruktion von der Gebäudeoberfläche trennt, ist typischerweise ein Drainageelement zum Ableiten von Wasser angeordnet. Auf das Drainageelement wird die Auflage aufgelegt. Ein Drainageelement kann beispielsweise als Kunststoffmatte mit Mulden ausgeformt sein. In den Mulden kann eine kleine Menge an Wasser zwischengespeichert werden. Typischerweise ist ein Drainageelement wenig wasserdurchlässig, damit Wasser abgeleitet wird.

Nachteilig an Drainageelementen ist, dass nur eine kleine Menge an Wasser zwischengespeichert werden kann. Damit rinnt Wasser bei einem Niederschlagsereignis schnell in die Kanalisation ab und wird nur wenig rückgehalten. Zudem ist es nicht möglich, substanzielle Mengen an Wasser aus einem Speicher zu entnehmen.

Die Aufgabe der Erfindung ist daher, die Wasserrückhaltung in einer Oberflächenkonstruktion zu vergrößern.

Die Aufgabe wird gelöst durch das Retentionselement aus Anspruch 1, durch die Anordnung aus Anspruch 14 und durch die Oberflächenkonstruktion aus Anspruch 15.

Ein Retentionsmodul weist mindestens eine der Auflage zugewandte, insbesondere wasserdurchlässige, Auflagefläche zum Auflegen der Auflage auf. Erfindungsgemäß ist vorgesehen, dass eine Mehrzahl an Abstandhaltern von der mindestens einen Auflagefläche in eine von der Auflage abgewandten Richtung absteht.

Die Auflage kann auf der Auflagefläche angeordnet werden. Die Mehrzahl an Abstandhalter kann auf eine Gebäudeoberfläche, gegebenenfalls auf eine auf der Gebäudeoberfläche aufliegende Schutzschicht- und/oder Dichtschicht, angeordnet werden.

Damit ermöglicht ein erfindungsgemäßes Retentionsmodul die Realisierung eines durch die Höhe der Abstandhalter definierten Retentionsspeicherraums zwischen der Gebäudeoberfläche und der Auflagefläche.

Im Retentionsspeicher kann eine substanzielle Menge an Wasser gespeichert werden. Damit wird Wasser von einem direkten Abfließen in die Kanalisation zurückgehalten, womit die Kanalisation bei einem Starkregenereignis entlastet wird. Wasser kann kontrolliert abgelassen werden.

Zudem kann Wasser mittels einer Pumpe oder mittels einer Kapillarvorrichtung, insbesondere einem Kapillarvlies, wieder der Auflage oder einer anderen (Grün-)Fläche zugeführt werden. Damit kann Frischwasser gespart werden.

Die Auflage kann eine Filterschicht, insbesondere ein Filtervlies, umfassen, welche auf die Auflagefläche auflegbar ist. Die Filterschicht ist wasserdurchlässig, hält aber die anderen Elemente der Auflage, insbesondere Substrat oder Kies, davon ab, durch die Auflagefläche zu fallen.

Die Auflagefläche muss dazu geeignet sein, dass eine Auflage aufgelegt werden kann. Die Auflagefläche ist insbesondere eben ausgebildet, es sind aber auch unebene Formen denkbar. Zusätzlich oder alternativ kann die Auflagefläche Löcher aufweisen, sodass die Auflagefläche wasserdurchlässig ist.

Die Mehrzahl an Abstandhalter ist bevorzugt als mehrere separate Abstandhalter ausgebildet. Es kann aber auch beispielsweise vorgesehen sein, dass die Mehrzahl an Abstandhalter außerhalb der Auflagefläche miteinander verbunden sind. Die Mehrzahl an Abstandhalter kann als ein dreidimensionales Gitter ausgebildet sein, bei welchem beispielsweise die Vertikalstreben des Gitters die Mehrzahl von Abstandhaltern bilden.

Die Auflagefläche kann insbesondere von einem, bevorzugt durchgängigen und/oder rechteckigen, Rahmen umgeben sein.

Damit ist die Außengrenze der Auflagefläche und des Retentionsmoduls klar definiert, sodass mehrere Retentionsmodule im Wesentlichen lückenlos aneinander angeordnet werden können. Damit kann eine Gebäudeoberfläche oder ein Bereich einer Gebäudeoberfläche nahezu lückenlos mit Retentionsmodulen parkettiert werden. Der Retentionsspeicher erstreckt sich dann über die gesamte Gebäudeoberfläche bzw. über den gesamten Bereich der Gebäudeoberfläche.

In einem bevorzugten Ausführungsbeispiel ist an mindestens einer Stirnseite des Retentionsmoduls, insbesondere am Rahmen, eine Verbindungsvorrichtung zum, insbesondere lösbaren, Verbinden des Retentionsmoduls mit einem weiteren Retentionsmodul angeordnet oder anordenbar. Mit der Verbindungsvorrichtung können mehrere Retentionsmodule miteinander verbunden werden, sodass eine Gebäudeoberfläche ausgefüllt, insbesondere parkettiert, werden kann.

Miteinander über die Verbindungsvorrichtung verbundene Retentionsmodule können aneinander befestigt sein oder einander bloß kontaktieren.

Die Verbindungsvorrichtung kann zum Teil als separater Bauteil und zum Teil als Vorrichtung am Bauteil des Rahmens ausgebildet sein.

Bevorzugt ist vorgesehen, dass die mindestens eine Verbindungsvorrichtung, insbesondere ausschließlich, in mindestens einem Berührungsabschnitt an das weitere Retentionsmodul anlegbar ist. Zwei derart verbundene Retentionsmodule können damit außerhalb des mindestens einen Berührungsabschnitts einen Abstand voneinander aufweisen, insbesondere in Form eines schmalen Spalts. Außerhalb des mindestens einen Berührungsabschnitts ist daher ein Spiel für eine Materialdehnung des Retentionsmoduls, beispielsweise aufgrund einer Temperaturerhöhung insbesondere des Materials, gegeben.

Besonders bevorzugt nimmt der mindestens eine Berührungsabschnitt weniger als ein Zehntel der Länge der mindestens einen Stirnseite ein. Zwei Retentionsmodule berühren sich in diesem Fall nur an verhältnismäßig kleinen Abschnitten.

In einem bevorzugten Ausführungsbeispiel umfasst die Verbindungsvorrichtung mindestens ein, insbesondere bewegliches, Ausgleichelement zum Kompensieren einer Materialdehnung und/oder -kontraktion des Retentionsmoduls. Insbesondere kann das Ausgleichselement ein zumindest teilweise über einen Ausgleichweg bewegbares Element der Verbindungsvorrichtung sein, welches durch seine Bewegung eine Materialdehnung und/oder -kontraktion und die daraus resultierende Relativbewegung zweier Retentionsmodule ausgleichen kann.

Das mindestens eine Ausgleichelement hat vorzugsweise einen Ausgleichweg von mindestens 2 Millimeter, besonders bevorzugt größer gleich 3 Millimeter. Damit kann ein Ausgleichelement eine Relativbewegung zweier Retentionsmodule, insbesondere zweier aneinander liegender Stirnseiten, von mindestens 2 Millimeter, bevorzugt größer gleich 3 Millimeter ausgeglichen werden. Wenn ein zweites Retentionsmodul ein gleiches oder ähnliches Ausgleichelement aufweist, kann folglich eine doppelt so große Relativbewegung zwischen zwei Retentionsmodulen, insbesondere zwischen zwei Stirnseiten, ausgeglichen werden.

Das mindestens eine Ausgleichelement kann als, besonders bevorzugt beidseitig befestigter, biegbarer Steg, insbesondere Blattfeder, ausgebildet sein. Durch die Biegung des Stegs kann eine Relativbewegung ausgeglichen werden.

Das mindestens eine Ausgleichelement kann als ein verschmälerter Teil eines, insbesondere an der mindestens einen Stirnseite angeordneten, Rahmens des Retentionsmoduls ausgebildet sein. Der verschmälerte Teil kann schmal genug sein, um bei einer Relativbewegung bewegt zu werden, während der restliche Rahmen bei den üblichen Kräften nicht beweglich ist.

Das mindestens eine Ausgleichelement kann eine rücktreibende Federkraft aufweisen. So kann es in seine ursprüngliche Ausgangslage zurückbewegt werden. Insbesondere ist das Ausgleichelement als Blattfeder ausgebildet.

In einem Ausführungsbeispiel weist das mindestens eine Ausgleichelement mindestens ein über die mindestens eine Stirnseite vorstehendes Anschlagelement zum Anschlagen an das weitere Retentionsmodul auf. Damit kann das mindestens eine Anschlagelement insbesondere als über die Kontur des Retentionsmoduls hinausstehender Vorsprung ausgebildet sein. Werden zwei Retentionsmodule aneinander angeordnet, berühren sich diese nur an den Anschlagelementen, sodass abgesehen von den Anschlagelementen zwischen den Retentionsmodulen ein Spalt entsteht. Wenn sich zwei aneinander anliegende Retentionsmodule ausdehnen, wirkt eine Kraft nur auf die Anschlagelemente, während dazwischen durch den Spalt Platz für die Ausdehnung bleibt. Da die Anschlagelemente auf den Ausgleichelementen angeordnet sind, kann eine solche Kraft durch Bewegung der Ausgleichelemente kompensiert werden.

Das mindestens eine Anschlagelement kann insbesondere als Betätigungselement des Ausgleichelements fungieren, über welches die Kraft auf das Ausgleichelement eingeleitet wird.

Zudem wirkt das Anschlagelement als Distanzteil zwischen zwei Retentionsmodulen, wenn die Kraft gering genug ist, sodass das Ausgleichelement nicht bewegt wird.

Besonders bevorzugt erstreckt sich das mindestens eine Anschlagelement über den Berührungsabschnitt, insbesondere kann das Anschlagelement den Berührungsabschnitt definieren.

Das mindestens eine Anschlagelement ist vorzugweise stoffschlüssig mit dem Retentionsmodul, insbesondere mit dem Rahmen, verbunden und insbesondere als Vorsprung desselben ausgebildet.

Insbesondere ist das Anschlagelement als Vorsprung an einem verschmälerten Teil des Rahmens ausgebildet.

In einem bevorzugten Ausführungsbeispiel weist die Verbindungsvorrichtung mindestens ein, insbesondere als separater Bauteil ausgeformtes, Befestigungselement auf. Mit dem Befestigungselement können zwei Retentionsmodule aneinander gehalten werden und damit lösbar miteinander verbunden werden.

Bevorzugt ist das mindestens eine Befestigungselement über eine Rastvorrichtung und/oder eine Steckvorrichtung an mindestens zwei Retentionsmodulen, insbesondere an deren Rahmen, formschlüssig und/oder kraftschlüssig befestigbar. Das Befestigungselement kann damit durch ein einfaches, werkzeugloses Anstecken angebracht werden und zwei Retentionsmodule aneinander befestigen.

Es kann mindestens ein Befestigungseinschnitt im Retentionsmodul vorgesehen sein. Das mindestens eine Befestigungselement kann in den mindestens einen Befestigungseinschnitt eingesetzt oder einsetzbar sein. Das Befestigungselement kann damit am Retentionsmodul besser und an einer definierten Stelle halten.

Insbesondere kann vorgesehen sein, dass der mindestens eine Befestigungseinschnitt an wenigstens einem Rahmen und/oder am wenigstens einen Ausgleichelement und/oder am mindestens einen Anschlagelement des Retentionsmoduls angeordnet ist. Bevorzugt ist das Ausgleichelement als Teil des Rahmens und das Anschlagelement am Ausgleichelement angeordnet.

Zwei Retentionsmodule können im Bereich eines Berührungsabschnitts, insbesondere im Bereich eines Anschlagelements, mittels eines Befestigungselements aneinander befestigt werden. Die Retentionsmodule werden also in jenem Bereich, in welchem die beiden Retentionsmodule aneinander anliegen, aneinander befestigt. Das ist vorteilhaft, da dies der Ort ist, an welchem die Relativbewegung zweier Retentionsmodule aufgrund einer Materialausdehnung oder -kontraktion mittels der Ausgleichsvorrichtung kompensiert wird.

Es ist bevorzugt vorgesehen, dass sich die Breite des mindestens einen Befestigungseinschnitts zur Auflagefläche hin vergrößert. Damit kann ein Befestigungselement so ausgebildet sein, dass es gegenüber einer Zugbewegung nach außen formschlüssig in dem Befestigungseinschnitt gehalten ist, insbesondere wenn das Befestigungselement eine Schwalbenschwanzform aufweist.

Es kann vorgesehen sein, dass das mindestens eine Befestigungselement einen, insbesondere an gegenüberliegenden Enden jeweils schwalbenschwanzförmig erweiterten, Basisteil aufweist.

Eine optionale schwalbenschwanzförmige Erweiterung an den Enden des Basisteils kann in Zusammenspiel mit einem zur Auflagefläche hin erweiterten Befestigungseinschnitt einen formschlüssigen Halt gegenüber Herausziehen des Befestigungselements nach außen innerhalb einer Richtung der Auflagefläche realisieren.

Damit müssen nicht unten beschriebene Stifte oder Halteteile die Kraft aufnehmen, die durch eine horizontale Verschiebung der Retentionsmodule entsteht. Die Stifte oder Halteteile müssen dagegen primär das Befestigungselement an den Retentionsmodulen halten.

In einer Alternative können mindestens zwei vom Basisteil abstehende Stifte vorgesehen sein, wobei die mindestens zwei Stifte in ein Steckloch des Retentionsmoduls einsteckbar sind. Das Steckloch kann in einem vom Rahmen des Retentionsmoduls abstehenden Lochkörper ausgeformt sein.

Bevorzugt weisen die mindestens zwei Stifte ein Übermaß in Bezug auf das Steckloch auf, sodass eine kraftschlüssige Verbindung zwischen einem Stift und einem Steckloch ermöglicht wird.

Zusätzlich oder alternativ können die mindestens zwei Stifte einen Rasthaken aufweisen, mittels welchem eine Rastverbindung geschaffen wird. Der Rasthaken kann kragenförmig um zumindest einen Teil des Umfangs des Stifts führen. Vorzugsweise ist ein diametraler Einschnitt im Stift vorgesehen, wodurch der Endbereich des Stifts mit den Rasthaken nach innen biegbar ist. Damit können die Stifte einrasten.

Die Stifte haben vorzugweise einen runden, insbesondere kreisförmigen, Durchschnitt.

Als Alternative zu den Stiften können mindestens zwei, insbesondere vier, vom Basisteil abstehende Halteteile jeweils mit einem Rasthaken am Basisteil vorgesehen sein.

Im Prinzip sind zwei äußere Halteteile, welche an den gegenüberliegenden Enden des Basisteils angeordnet sind, ausreichend. Der erste äußere Halteteil kann in ein erstes Retentionsmodul eingreifen und der zweite äußere Halteteil kann in ein zweites Retentionsmodul eingreifen, insbesondere in deren Rahmen.

Insbesondere kann das mindestens eine Befestigungselement als, insbesondere im Wesentlichen U-förmige, Klammer mit zwei Halteteilen ausgebildet sein.

Bevorzugt sind zusätzlich zwei innere Halteteile in einem Mittelbereich des Basisteils angeordnet, wobei zwischen einem ersten äußeren Halteteil und einem ersten inneren Halteteil oder zwischen einem zweiten äußeren Halteteil und einem zweiten inneren Halteteil jeweils ein Retentionsmodul, insbesondere ein Rahmen, einrastbar ist.

Damit werden beide Retentionsmodule individuell gehalten und zusätzlich aneinander gehalten, was einen besseren Halt garantiert.

Am Rahmen, insbesondere am Ausgleichelement und/oder am Anschlagelement, können Ausnehmungen angeordnet sein, in welche die inneren Halteteile zumindest teilweise einbringbar sind. Damit können die Rahmen, insbesondere die Anschlagelemente, direkt aneinander anliegen, obwohl die inneren Halteteile zwischen den Rahmen, insbesondere den Anschlagelementen, angeordnet sind.

Insbesondere kann das mindestens eine Befestigungselement als Doppelklammer ausgebildet sein, wobei jeweils eine Klammer zum Eingriff in ein Retentionsmodul vorgesehen ist.

Bevorzugt ist vorgesehen, dass die mindestens zwei, insbesondere vier, Halteteile im rechten Winkel vom Basisteil abstehen.

In einem alternativen Ausführungsbeispiel kann vorgesehen sein, dass das mindestens eine Ausgleichelement als beweglicher Teil des mindestens einen Befestigungselements, welches insbesondere ein separater Bauteil sein kann, ausgeformt ist.

Zusätzlich oder alternativ kann mindestens ein Anschlagelement am Befestigungselement angeordnet sein. Insbesondere kann das Anschlagelement als Distanzteil zum variablen Beabstanden zweier Retentionsmodule in einem Mittelbereich des Basisteils angeordnet sein. Es können beispielsweise die inneren Halteteile als Distanzteile fungieren.

In einem bevorzugten Ausführungsbeispiel ist vorgesehen, dass mindestens ein Abstandhalter der Mehrzahl an Abstandhalter pyramidenstumpf- oder kegelstumpfförmig ausgebildet ist. Ein Pyramidenstumpf und ein Kegelstumpf weisen typischerweise eine Grundfläche und eine Deckfläche auf, wobei die Deckfläche kleiner als die Grundfläche ist. Zudem weist ein Pyramidenstumpf und ein Kegelstumpf eine Mantelfläche auf, welche im Fall eines Pyramidenstumpfs Kanten aufweist.

Es sind auch Kombinationen aus pyramiden- und kegelstumpfförmig als Form für den mindestens einen Abstandhalter denkbar.

Eine Grundfläche des mindestens einen Abstandhalters ist vorzugsweise in der Auflagefläche angeordnet. In der bevorzugten Verwendungslage des Retentionsmoduls ist die Grundfläche daher "oben" angeordnet und der Pyramidenstumpf bzw. der Kegelstumpf steht am Kopf. Der Abstandhalter steht mit seiner Deckfläche am Boden, insbesondere der Gebäudeoberfläche.

Besonders bevorzugt ist die Grundfläche offen. Damit kann Wasser durch die Auflagefläche hindurch in den Abstandhalter fließen.

Vorzugsweise weist der mindestens eine Abstandhalter im Bereich einer der mindestens einen Auflagefläche abgewandten Deckfläche mindestens eine Durchgangsöffnung zum Abfließen von Wasser auf. Damit staut sich Wasser nicht im Abstandhalter. Zudem kann das Volumen des Abstandhalters zum Volumen des Retentionsspeichers beitragen.

Vorzugsweise ist vorgesehen, dass der mindestens eine Abstandhalter eine sich von der Grundfläche zur Deckfläche verjüngende Form aufweist, sodass zwei gleichartige Abstandhalter und/oder Retentionsmodule mit gleich angeordneten und gleichartigen Abstandhaltern stapelbar sind.

Die Stapelbarkeit ist insbesondere bei der Anlieferung der Retentionsmodule von Vorteil, da das Packmaß um ein Vielfaches verringert wird.

Es kann vorgesehen sein, dass eine Grundfläche und/oder eine Deckfläche dreieckig, viereckig, sechseckig oder kreisförmig ausgebildet ist. Insbesondere ist eine Grundfläche und/oder eine Deckfläche als regelmäßiges Polygon ausgebildet.

Bevorzugt ist vorgesehen, dass die Abstandhalter ausschließlich im Bereich der Auflagefläche miteinander verbunden sind. Es bestehen also keine Querstreben zwischen den Abstandhaltern außerhalb eines Bereichs der Auflagefläche. Damit wird die Stapelbarkeit der Retentionselemente ermöglicht. Zudem wird das Volumen des Retentionsspeichers nicht durch Querstreben verkleinert.

Retentionsmodule müssen einer hohen Druckbelastung widerstehen können. Es kann beispielsweise erforderlich sein, einer Druckbelastung von 100, bevorzugt 500, besonders bevorzugt 800 Kilonewton pro Quadratmeter, insbesondere gemessen nach DIN 25619/2, zu widerstehen. Die relativ hohen Drücke können insbesondere durch Fahrzeuge, welche auf einem Fahrbelag über den Retentionsmodulen fahren, entstehen.

Um eine derart hohe Druckbelastung zu ermöglichen, können besondere Verstärkungselemente vorgesehen sein. Insbesondere wenn eine Stapelbarkeit der Retentionsmodule garantiert werden muss und die Abstandhalter nur im Bereich der Auflagefläche miteinander verbunden sind (ohne Querstreben) und/oder die Abstandhalter eine sich verjüngende Form aufweisen, ist es schwierig eine derart hohe Druckbelastung zu ermöglichen.

In einem Ausführungsbeispiel weist der mindestens eine Abstandhalter wenigstens ein von der pyramidenstumpf- oder kegelstumpfförmigen Form abweichendes, insbesondere nach innen gestülptes, Verstärkungselement auf.

Das Verstärkungselement verstärkt den Abstandhalter, sodass das Retentionsmodul einem höheren Druck widerstehen kann. Insbesondere wird damit ermöglicht, dass die Abstandhalter ohne Querstreben auskommen und eine sich verjüngende Form aufweisen können. Damit kann gleichzeitig eine Stapelbarkeit und eine große Stabilität der Retentionsmodule erreicht werden.

"Nach innen gestülpt" bedeutet, dass das Verstärkungselement eine der Krümmung der Mantelfläche des Abstandhalters entgegengesetzte Gegenkrümmung aufweist. Damit wird die Stabilität erhöht.

Im Fall mindestens eines pyramidenstumpfförmigen Abstandhalters kann das wenigstens eine Verstärkungselement an wenigstens einer, vorzugsweise allen, Kanten der Mantelfläche des Pyramidenstumpfs angeordnet sein.

Bevorzugt kann das wenigstens eine Verstärkungselement eine der Krümmung der wenigstens einen Kante entgegengesetzte Gegenkrümmung aufweisen.

Die wenigstens eine Kante wird, abweichend von der pyramidenstumpfförmigen Form, zumindest abschnittsweise vom Verstärkungselement mit der Gegenkrümmung ersetzt.

Es kann vorgesehen sein, dass das wenigstens eine Verstärkungselement angrenzend an eine Deckfläche des mindestens einen Abstandhalters angeordnet ist. In der bevorzugten Einbaulage des Retentionsmoduls ist das Verstärkungselement damit im unteren Bereich des Retentionsmoduls angeordnet.

Es kann vorgesehen sein, dass mindestens zwei, insbesondere vier oder sechs, Verstärkungselemente rotationssymmetrisch angeordnet sind. "Rotationssymmetrisch" ist vorzugsweise in Bezug auf eine Zentralachse eines Abstandhalters gemeint. Insbesondere kann eine diskrete Rotationssymmetrie gemeint sein. Insbesondere kann gemeint sein, dass die Verstärkungselemente azimutal gleichverteilt um eine Zentralachse des mindestens einen Abstandhalters angeordnet sind.

In einem bevorzugten Ausführungsbeispiel sind mindestens zwei Verstärkungselemente vorgesehen, wobei die mindestens zwei Verstärkungselemente über mindestens eine Verstärkungsstrebe miteinander verbunden sind. Die Verstärkungsstreben erhöhen die Stabilität des Abstandhalters und des Retentionsmoduls.

Bevorzugt ist vorgesehen, dass die mindestens eine Verstärkungsstrebe mit der Deckfläche des mindestens einen Abstandhalters verbunden ist. Die Deckfläche ist in diesem Fall, bis auf etwaige Durchgangsöffnungen, geschlossen, beispielsweise mit einer Kunststoffplatte. Durch die Verbindung mit der Deckfläche wird die Stabilität erhöht.

Bevorzugt ist vorgesehen, dass mindestens zwei in Bezug auf eine Zentralachse des mindestens einen Abstandhalters gegenüberliegende Verstärkungselemente über die mindestens eine Verstärkungsstrebe verbunden sind.

Bevorzugt ist vorgesehen, dass mindestens zwei, insbesondere drei, Verstärkungsstreben vorgesehen sind, wobei die mindestens zwei, insbesondere drei, Verstärkungsstreben von einer Zentralachse des mindestens einen Abstandhalters sternförmig nach außen zu den Verstärkungselementen laufen.

Bevorzugt kann vorgesehen sein, dass die mindestens zwei, insbesondere drei, Verstärkungsstreben, insbesondere entlang einer Zentralachse des mindestens einen Abstandhalters, miteinander verbunden sind. Diese Maßnahme erhöht die Stabilität.

In einem bevorzugten Ausführungsbeispiel wird die mindestens eine Auflagefläche von einer Mehrzahl von miteinander verbundenen Stegen aufgespannt. Die Ausführung mit Stegen ermöglich eine leichte Bauweise des Retentionsmoduls. Die Flächen zwischen den Stegen können offen oder geschlossen sein. Bevorzugt ist ein Großteil der Flächen offen, sodass Wasser zwischen den Stegen durch die Auflagefläche fließen kann. Die Stege sollten gleichzeitig aber dicht genug angeordnet sein, sodass eine darauf aufliegende Filterschicht, insbesondere ein Filtervlies, ausreichend unterstützt ist und damit nicht reißt.

Bevorzugt bildet die Mehrzahl an Stegen eine flächige Gitterstruktur aus mehreren, insbesondere gleichförmigen, Polygonen aus. Damit entstehen keine größeren Löcher in der Gitterstruktur. Alle Polygone, außer jene im Randbereich, können gleich ausgeformt sein.

Es kann vorgesehen sein, dass die Polygone lückenlos und überlappungsfrei angeordnet sind. Abgesehen vom Randbereich können die Polygone die gesamte Fläche ausfüllen.

Es kann vorgesehen sein, dass die Polygone als Dreieck, Viereck oder Sechseck ausgebildet sind. Besonders bevorzugt sind die Polygone als regelmäßige Sechsecke ausgebildet. Solche Polygone eignen sich insbesondere zur lückenlosen und überlappungsfreien Anordnung. Eine Gitterstruktur aus Sechsecken garantiert zudem eine hohe Stabilität.

Es kann vorgesehen sein, dass zumindest ein Großteil der Polygone der Gitterstruktur offen sind, sodass Wasser durch die Polygone fließen kann. Einige Polygone können auch geschlossen sein.

Es kann vorgesehen sein, dass mindestens ein Abstandhalter der Mehrzahl an Abstandhalter eine polygonale Grundfläche aufweist, und insbesondere pyramidenstumpfförmig ausgebildet ist. Dabei kann die polygonale Grundfläche von den Stegen, die ein Polygon der Gitterstruktur bilden, begrenzt werden. Die Abstandhalter können demnach in die Gitterstruktur integriert werden. Zwischen zwei Abstandhaltern kann eine gewisse Anzahl an Polygonen ohne Abstandhalter angeordnet sein. Es kann aber auch vorgesehen sein, dass von nahezu jedem Polygon ein Abstandhalter ausgeht.

Die Länge der mindestens einen Auflagefläche kann 500 bis 1200, insbesondere rund 592, Millimeter betragen.

Die Breite der mindestens einen Auflagefläche kann 300 bis 800, insbesondere rund 396, Millimeter betragen.

Die Höhe des mindestens einen Abstandhalters kann 60 bis 200, insbesondere rund 60, 90 oder 150, Millimeter betragen.

In einem bevorzugten Ausführungsbeispiel kann vorgesehen sein, dass das Retentionsmodul zumindest teilweise, vorzugsweise zur Gänze, aus Polyolefinen gefertigt ist. Polyolefine sind eine Mischung aus Polyethylen und Polypropylen. Insbesondere kann das Retentionsmodul aus recyceltem Kunststoff gefertigt werden.

In einem bevorzugten Ausführungsbeispiel ist das Retentionsmodul mittels Spritzgießen hergestellt. Insbesondere wird das gesamte Retentionsmodul, abgesehen vom Befestigungselement, in einem Stück hergestellt.

Das Retentionselement kann so ausgeformt sein, dass es eine Druckbelastung von 100, bevorzugt 500, besonders bevorzugt 800 Kilonewton pro Quadratmeter, insbesondere gemessen nach DIN 25619/2, aushält. DIN 25619/2 betrifft die Bestimmung des Kurzzeit-Druckverhaltens.

Eine erfindungsgemäße Anordnung aus mindestens zwei Retentionsmodulen umfasst mindestens ein Retentionsmodul mit einer Verbindungsvorrichtung. Die mindestens zwei Retentionsmodule sind über die mindestens eine Verbindungsvorrichtung verbunden, insbesondere aneinander befestigt oder einander kontaktierend.

Bevorzugt ist zwischen den Stirnseiten der mindestens zwei verbundenen Retentionsmodule ein Spalt angeordnet, wobei der Spalt bei einer ersten Temperatur eine erste Breite aufweist und bei einer zweiten Temperatur eine zweite Breite aufweist, wobei die erste Breite von der zweiten Breite verschieden ist, wenn die erste Temperatur von der zweiten Temperatur verschieden ist. Durch einen Temperaturunterschied kann eine Materialausdehnung oder -kontraktion erfolgen, wodurch die Breite des Spalts verändert wird. Gäbe es keinen Spalt, würden die Retentionsmodule bei einer Materialausdehnung aufeinandergedrückt werden und zerstört werden oder Unebenheiten in der Auflage erzeugen.

Insbesondere ist mit der "Temperatur" im vorhergehenden Absatz die Temperatur des Materials des Retentionsmoduls gemeint. Diese Temperatur kann aufgrund der Sonneneinstrahlung viel größer als die Außentemperatur sein.

Eine erfindungsgemäße Oberflächenkonstruktion weist mindestens eine Anordnung aus mindestens zwei Retentionsmodulen auf. Die Oberflächenkonstruktion weist eine Auflage, insbesondere eine Dachbegrünung, eine Kiesfläche und/oder einen Geh- und/oder Fahrbelag auf. Die Anordnung aus mindestens zwei Retentionsmodulen liegt auf einer Gebäudeoberfläche, insbesondere auf einer auf der Gebäudeoberfläche aufliegenden Schutzschicht, auf, sodass die Auflage von der Gebäudeoberfläche beabstandet ist. Damit wird eine Retentionsspeicher für Wasser geschaffen.

Weitere Ausführungsbeispiele und Details sind den Figuren zu entnehmen. Dabei zeigen:
- Fig. 1: Retentionsmodul einer ersten Ausführungsform in einer Schrägansicht von oben
- Fig. 2: Retentionsmodul aus Fig. 1 in einer Schrägansicht von unten
- Fig. 3: Retentionsmodul aus Fig. 1 in einer Draufsicht
- Fig. 4: Retentionsmodul aus Fig. 1 in einer Unteransicht
- Fig. 5: Retentionsmodul aus Fig. 1 in einer Seitenansicht der Längsseite
- Fig. 6: Retentionsmodul aus Fig. 1 in einer Seitenansicht der Breitseite
- Fig. 7a: Befestigungselement mit Stiften
- Fig. 7b: Befestigungselement mit Stiften und Rasthaken
- Fig. 8a: Zwei miteinander durch ein Befestigungselement verbundene Retentionsmodule in Schrägansicht
- Fig. 8b: Zwei miteinander durch ein Befestigungselement verbundene Retentionsmodule in Seitenansicht
- Fig. 9: Zwei miteinander durch ein Befestigungselement verbundene Retentionsmodule in Draufsicht
- Fig. 10: Zwei miteinander durch ein Befestigungselement verbundene Retentionsmodule in Unteransicht
- Fig. 11: Retentionsmodul einer zweiten Ausführungsform in einer Schrägansicht von oben
- Fig. 12: Retentionsmodul aus Fig. 11 in einer Schrägansicht von unten
- Fig. 13: Retentionsmodul aus Fig. 11 in einer Draufsicht
- Fig. 14: Retentionsmodul aus Fig. 11 in einer Unteransicht
- Fig. 15: Befestigungselement mit vier Halteteilen
- Fig. 16: Oberflächenkonstruktion auf einer Gebäudeoberfläche mit zwei Retentionsmodulen und einer Auflage

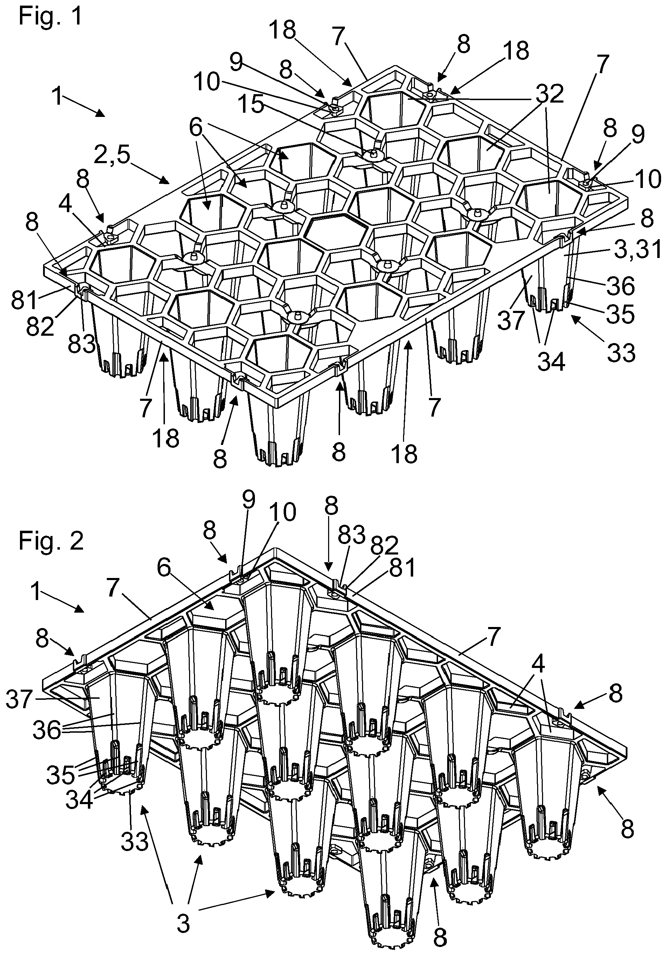

Die Figuren 1 bis 6 zeigen das Retentionsmodul 1 einer ersten Ausführungsform in verschiedenen Ansichten.

Das gezeigte Retentionsmodul 1 ist zur Beabstandung einer Auflage 16, insbesondere einer Dachbegrünung, Kiesfläche und/oder Geh- und/oder Fahrbelag, von einer Gebäudeoberfläche 17 geeignet. Die Auflage 16 und die Gebäudeoberfläche 17 sind in den Figuren 1 bis 6 nicht gezeigt. In einer bevorzugten Verwendungslage des Retentionsmoduls 1 wird die Auflage 16 an der Oberseite des Retentionsmoduls 1 aufgelegt. Mit der Unterseite des Retentionsmoduls 1 steht das Retentionsmodul 1 auf der Gebäudeoberfläche 17 auf.

Das Retentionsmodul 1 weist mindestens eine der Auflage 16 zugewandte, insbesondere wasserdurchlässige, Auflagefläche 2 zum Auflegen der Auflage 16 auf. Zudem weist das Retentionsmodul 1 eine Mehrzahl an Abstandhaltern 3 auf, die von der mindestens einen Auflagefläche 2 in eine von der Auflage 16 abgewandten Richtung absteht.

Die Auflage 16 ist nicht Teil des Retentionsmoduls 1.

Die Auflagefläche 2 ist von einem durchgängigen und rechteckigen Rahmen 7 umgeben. Der Rahmen 7 ist aus Stegen 4 gebildet.

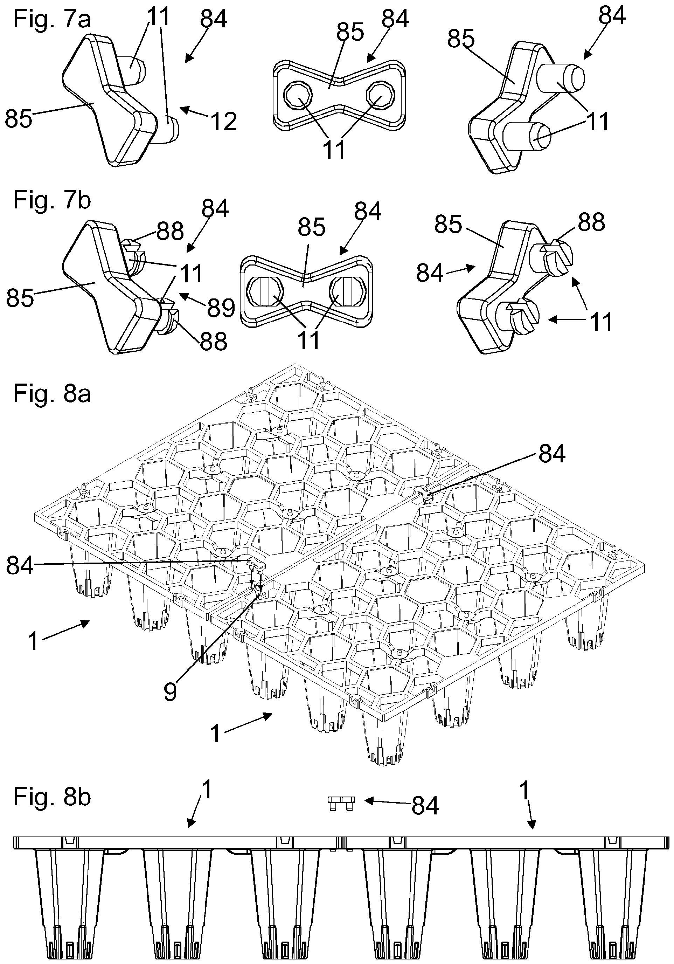

An den Stirnseiten 18 des Retentionsmoduls 1, insbesondere am Rahmen 7, sind insgesamt acht Teile von Verbindungsvorrichtungen 8 zum, insbesondere lösbaren, Verbinden des Retentionsmoduls 1 mit einem weiteren Retentionsmodul 1 angeordnet. Über diese Verbindungsvorrichtungen 8 kann, unter Zunahme eines in den Figuren 7a und 7b genauer beschriebenen Befestigungselements 84 ein Retentionsmodul 1 an einem weiteren Retentionsmodul 1 befestigt werden. Zwei Retentionsmodule 1 können einander aber auch ohne Befestigungselemente 84 lediglich kontaktieren. Die mindestens eine Verbindungsvorrichtung 8 ist, insbesondere ausschließlich, in mindestens einem Berührungsabschnitt an das weitere Retentionsmodul 1 anlegbar. Der mindestens eine Berührungsabschnitt nimmt weniger als ein Zehntel der Länge der mindestens einen Stirnseite 18 ein.

Die Verbindungsvorrichtung 8 umfasst mindestens ein Ausgleichelement 81 zum Kompensieren einer Materialdehnung und/oder -kontraktion des Retentionsmoduls 1.

Das mindestens eine Ausgleichelement 81 verfügt über mindestens ein über die mindestens eine Stirnseite 18 vorstehendes Anschlagelement 82 zum Anschlagen an das weitere Retentionsmodul 1.

Das Anschlagelement 82 definiert in diesem Ausführungsbeispiel den Berührungsabschnitt, in welchem sich zwei Retentionsmodule 1 berühren. Im Ausführungsbeispiel der Figuren 1 bis 6 sind alle Anschlagelemente 82 als Teil des Rahmens 7 ausgebildet.

Das Ausgleichelement 81 ist als beidseitig befestigter, biegbarer Steg, insbesondere als Blattfeder, ausgebildet. Insbesondere ist das Ausgleichelement 81 als ein verschmälerter Teil eines, insbesondere an der mindestens einen Stirnseite 18 angeordneten, Rahmens 7 des Retentionsmoduls 1 ausgebildet.

Das Ausgleichelement 81 kann über einen Ausgleichweg von mindestens 2 Millimeter, bevorzugt mindestens 3 Millimeter, bewegt werden.

Das mindestens eine Anschlagelement 82 ist auf dem mindestens einen Ausgleichelement 81 angeordnet, und besonders bevorzugt stoffschlüssig mit dem Ausgleichelement 81 verbunden.

Das Anschlagelement 82 fungiert als Betätigungselement des Ausgleichelements 81. Wenn das Retentionsmodul 1 an ein weiteres Retentionsmodul 1 oder ein anderes Objekt bewegt wird, wird das Ausgleichelement 81 mittels des Anschlagelements 82 bewegt. Das kann insbesondere dann passieren, wenn sich ein Retentionsmodul 1 aufgrund einer Materialausdehnung oder -kontraktion ausdehnt oder kontrahiert und es dadurch zu einer Relativbewegung in Bezug auf ein weiteres Retentionsmodul 1 oder Objekt kommt.

Durch die Verschmälerung des Rahmens 7 kann das Anschlagelement 82 eingedrückt werden oder weiter nach außen gezogen werden. So kann eine Materialausdehnung oder - kontraktion kompensiert werden.

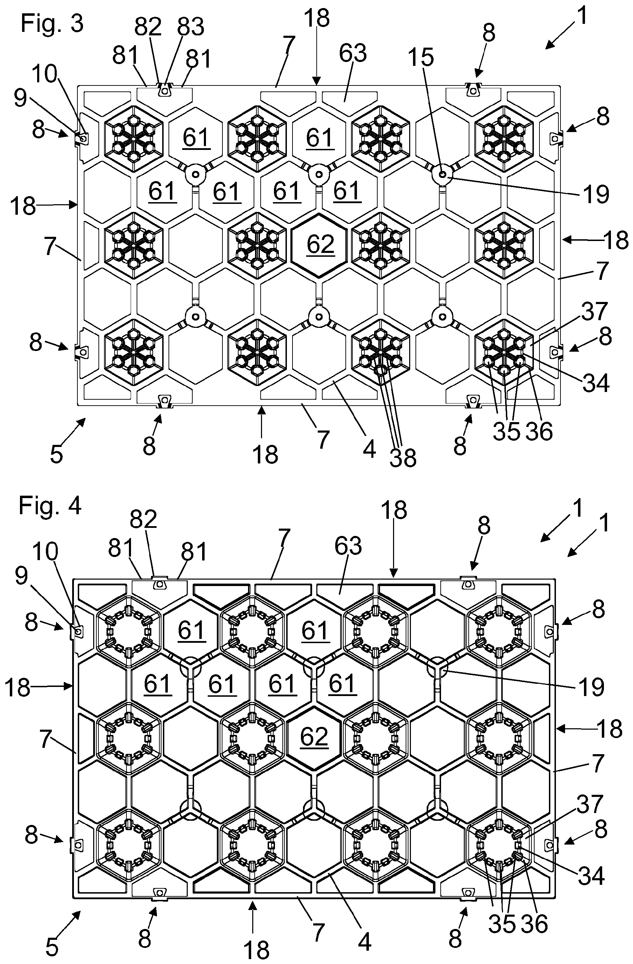

Im Anschlagelement 82 ist zudem ein Befestigungseinschnitt 83 vorgesehen sein. Wie insbesondere in der Fig. 3 ersichtlich, weitet sich der Befestigungseinschnitt 83 zum Retentionsmodul 1 hin, sodass ein schwalbenschwanzförmiges Befestigungselement 84 einbringbar ist.

Zudem ersichtlich ist ein vom Rahmen 7 nach innen abstehender Lochkörper 10, in welchem ein Steckloch 9 angeordnet ist. Das Steckloch 9 ist eine Durchgangsöffnung zum Einstecken eines Stifts 11 eines Befestigungselements 84.

Ein geeignetes Befestigungselement 84 ist in den Figuren 7a und 7b beschrieben.

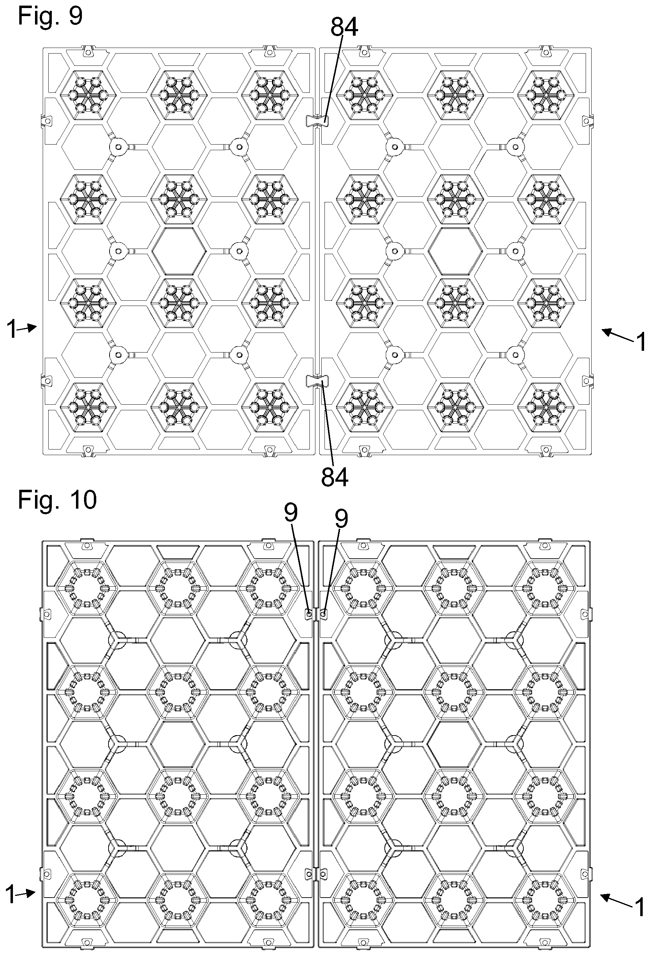

Dadurch, dass die Verbindung am Anschlagelement 82 stattfindet, wird garantiert, dass sich zwei Retentionsmodule 1 am Anschlagelement 82 und nur über einen relativ kleinen Berührungsabschnitt berühren, wie beispielsweise aus den Figuren 9 und 10 ersichtlich ist.

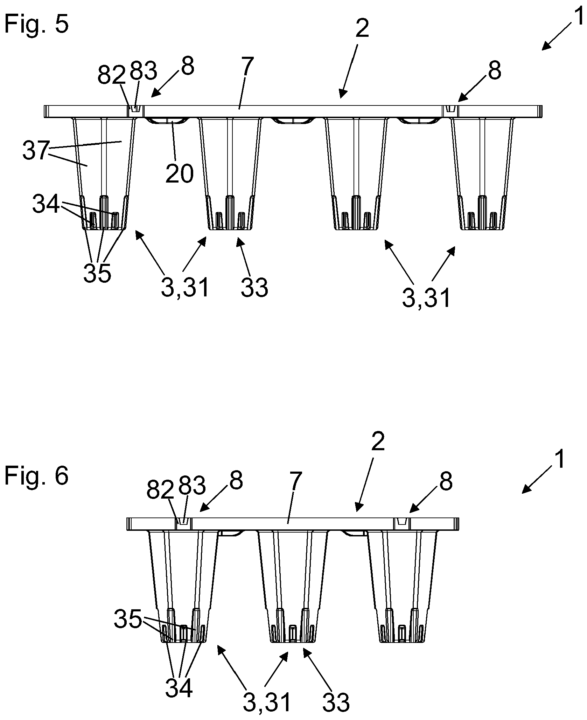

Insbesondere aus den Figuren 5 und 6 ist ersichtlich, dass die Abstandhalter 3 ausschließlich im Bereich der Auflagefläche 2 miteinander verbunden sind. Damit ist das Retentionsmodul 1 stapelbar ausgeführt und dem Retentionsspeicher wird ein Minimum an Volumen weggenommen.

Die Abstandhalter 3 sind pyramidenstumpfförmig ausgebildet. Die Grundflächen 32 der Abstandhalter 3 sind in der Auflagefläche 2 angeordnet und offen. Wasser kann daher von oben durch die Auflagefläche 2 in den Pyramidenstumpf 31 gelangen.

Die Abstandhalter 3 weisen im Bereich einer der Auflagefläche 2 abgewandten Deckfläche 33 mindestens eine Durchgangsöffnung 34 zum Abfließen von Wasser auf. Insbesondere sind sechs Durchgangsöffnungen 34 vorgesehen. Die Durchgangsöffnungen 34 sind an der Deckfläche 33 und an den Mantelflächen 37 angeordnet, wobei der Großteil an den Mantelflächen 37 angeordnet ist. Die Deckfläche 33 ist, im Gegensatz zur Grundfläche 32, geschlossen.

Die Abstandhalter 3 weisen eine sich von der Grundfläche 32 zur Deckfläche 33 verjüngende Form auf, sodass zwei gleichartige Abstandhalter 3 und/oder Retentionsmodule 1 mit gleich angeordneten und gleichartigen Abstandhaltern 3 stapelbar sind.

Die Grundfläche 32 und/oder die Deckfläche 33 sind im Wesentlichen regelmäßig sechseckig ausgebildet. Bei der Deckfläche 33 ist die Form wegen Durchgangsöffnungen 34 und Verstärkungselemente 35 weniger genau ausgeprägt. Die Grundflächen 32 sind dagegen von einem Sechseck aus Stegen 4, welches Teil einer Gitterstruktur 5 sind, umfasst.

Die Abstandhalter 3 weisen wenigstens ein von der pyramidenstumpfförmigen Form abweichendes, nach innen gestülptes, Verstärkungselement 35 auf.

Das Verstärkungselement 35 ist an allen sechs Kanten 36 der Mantelfläche 37 des Pyramidenstumpfs 31 angeordnet.

Das Verstärkungselement 35 weist eine der Krümmung der wenigstens einen Kante 36 entgegengesetzte Gegenkrümmung auf und ersetzt die jeweilige Kante 36 abschnittsweise. Das Verstärkungselement 35 ist angrenzend an eine Deckfläche 33 des mindestens einen Abstandhalters 3 angeordnet.

Die sechs Verstärkungselemente 35 sind rotationssymmetrisch angeordnet. Insbesondere sind die Verstärkungselemente 35 an allen Kanten 36 des (regelmäßigen) Pyramidenstumpfs 31 angeordnet und damit azimutal gleichverteilt in Bezug auf eine Zentralachse des Pyramidenstumpfs 31. Siehe hierzu insbesondere Figuren 3 und 4.

Es sind jeweils zwei Verstärkungselemente 35 über eine Verstärkungsstrebe 38 miteinander verbunden, wie aus der Fig. 3 ersichtlich ist. Die Verstärkungsstreben 38 sind mit der Deckfläche 33 des jeweiligen Abstandhalters 3 verbunden. Insbesondere stehen sie von der Deckfläche 33 ins Innere des Pyramidenstumpfs 1 ab. Zudem sind die mindestens zwei, insbesondere drei, Verstärkungsstreben 38 entlang einer Zentralachse des mindestens einen Abstandhalters 3 miteinander verbunden.

Insbesondere sind jeweils zwei in Bezug auf eine Zentralachse des Abstandhalters 3 gegenüberliegende Verstärkungselemente 35 über eine Verstärkungsstrebe 38 miteinander verbunden. Es sind insgesamt drei Verstärkungsstreben 38 vorgesehen, wobei die drei Verstärkungsstreben 38 von einer Zentralachse des mindestens einen Abstandhalters 3 sternförmig nach außen zu den Verstärkungselementen 35 laufen. Im Bereich der Zentralachse sind die drei Verstärkungsstreben 38 miteinander verbunden.

Die Auflagefläche 2 wird von einer Mehrzahl von miteinander verbundenen Stegen 4 aufgespannt. Die Mehrzahl an Stegen 4 bildet damit eine flächige Gitterstruktur 5 aus mehreren, insbesondere gleichförmigen, Polygonen 6 aus, wobei die Polygone 6, außer am Rand, als Sechsecke 6 ausgebildet sind. Die Sechsecke 6 sind lückenlos und überlappungsfrei angeordnet und bilden ein Wabengitter.

Zum Rand hin wird die Gitterstruktur 5 von einem aus Stegen 4 gebildeten Rahmen 7 begrenzt. Damit sind einige Polygone 6 am Rand nicht als Sechsecke 6 oder als abgeschnittene Sechsecke 63 ausgebildet.

Ein Großteil der Sechsecke 6 der Gitterstruktur 5 sind offen, sodass Wasser durch die Sechsecke 6 fließen kann (offene Sechsecke 61). Das zentrale Sechseck 6 ist beispielsweise geschlossen ausgebildet (geschlossenes Sechseck 62).

Die Abstandhalter 3 der Mehrzahl an Abstandhalter 3 weisen eine sechseckige Grundfläche 32 auf. Die sechseckige Grundfläche 32 wird von den Stegen 4, die ein Sechseck 6 der Gitterstruktur 5 bilden, begrenzt. Die Abstandhalter 3 sind damit in die Gitterstruktur 5 integriert. Zwischen den Abstandhaltern 3 ist mindestens ein Sechseck 6 angeordnet. Es kann aber auch vorgesehen sein, dass die Abstandhalter 3 von benachbarten Sechsecken 6 ausgehen.

An manchen Knotenpunkten von drei Sechsecken 6, von welchen drei Stege 4 ausgehen, ist eine Verbindungsscheibe 19 angeordnet. Auf der Verbindungsscheibe 19 ist jeweils ein vom Spritzguss kommender Anguss 15 angeordnet. Die von einem solchen Knotenpunkt ausgehenden Stege 4 sind nach unten abgesenkt (Absenkung 20 der Stege 4 in Fig. 5), sodass die Verbindungsscheibe 19 zur Auflagefläche 2 versetzt nach unten angeordnet ist. Damit steht der von der Verbindungsscheibe 19 nach oben vorstehende Anguss 15 nicht über die Auflagefläche 2 vor, womit eine Beschädigung der Auflage, insbesondere einer Filterschicht, vermieden wird.

Ein Retentionsmodul 1 nach den Figuren 1 bis 6 kann zumindest teilweise, vorzugsweise zur Gänze, aus Polyolefinen gefertigt sein und/oder mittels Spritzgießen hergestellt sein.

Durch die besondere Form und insbesondere durch die Verstärkungselemente 35 hält das Retentionsmodul eine Druckbelastung von 100, bevorzugt 500, besonders bevorzugt 800 Kilonewton pro Quadratmeter, insbesondere gemessen nach DIN 25619/2, aus.

Die Maße des Retentionsmoduls 1 können an die jeweiligen Anfordernisse angepasst werden. Insbesondere sind die folgenden Maße geeignet:
- die Länge der Auflagefläche 2 beträgt 500 bis 1200, insbesondere rund 592, Millimeter, und/oder
- die Breite der Auflagefläche 2 beträgt 300 bis 800, insbesondere rund 396, Millimeter, und/oder
- die Höhe des Abstandhalters 3 beträgt 60 bis 200, insbesondere rund 60, 90 oder 150, Millimeter.

Die Figuren 7a und 7a zeigen zwei verschieden Ausführungsbeispiele eines Befestigungselements 84 eines Retentionsmoduls 1.

Die Befestigungselemente 84 weisen jeweils einen Basisteil 85 auf, welche an seinen gegenüberliegenden Enden schwalbenschwanzförmig erweitert ist. Der Basisteil 85 ist so geformt, dass er in die Befestigungseinschnitte 83 der Retentionsmodule 1 einbringbar ist.

Zudem weist der Basisteil 85 zwei vom Basisteil 85 abstehenden Stifte 11 auf. Die mindestens zwei Stifte 11 sind in ein Steckloch 9 des Retentionsmoduls 1 einsteckbar.

In Fig. 7a weisen die zwei Stifte 11 ein Übermaß in Bezug auf das Steckloch 9 auf. Damit kann eine kraftschlüssige Steckverbindung 12 geschaffen werden.

In Fig. 7b weisen die zwei Stifte 11 mindestens einen Rasthaken 88 auf. Insbesondere weise die Stifte 11 einen diametralen Einschnitt an den Enden auf, wobei beidseits des diametralen Einschnitts ein Rasthaken 88 vorgesehen ist. Es wird damit eine Rastvorrichtung 89 geschaffen wird.

Die Fig. 8a und die Fig 8b zeigen zwei aneinander angeordnete, sich kontaktierende Retentionsmodule 1 der Ausführungsform aus den Figuren 1 bis 6, welche mittels der Befestigungselemente 84 aus den Figuren 7a oder 7b aneinander befestigt werden. Dazu werden die Befestigungselement 84 in die Stecklöcher 9 der Retentionsmodule 1 eingebracht.

Aus Fig. 8a ist auch ersichtlich, dass abgesehen von den Berührungsabschnitten im Bereich der Verbindungsvorrichtung 8 ein Spalt zwischen den Retentionsmodulen 1 angeordnet ist.

Die Figuren 9 und 10 zeigen aneinander angeordnete und befestigte Retentionsmodule 1 in Draufsicht und Unteransicht.

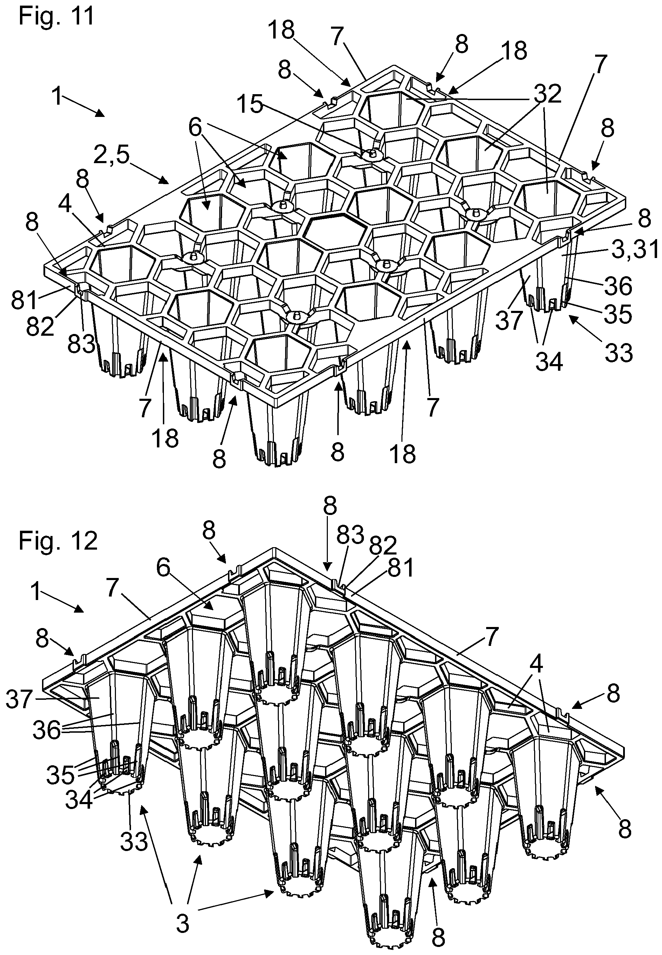

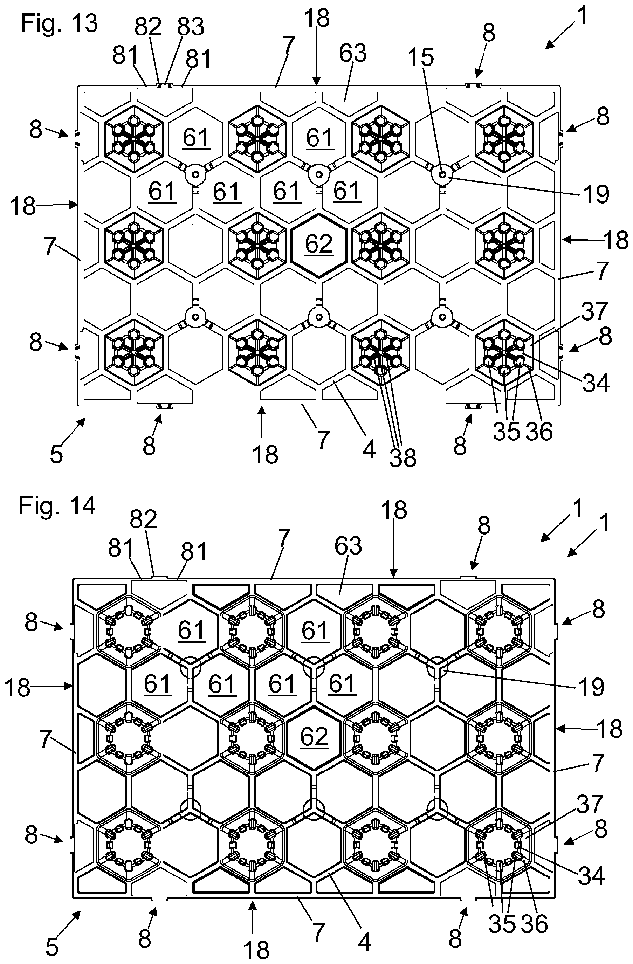

Die Figuren 11 bis 14 zeigen ein Retentionsmodul 1 einer zweiten Ausführungsform. Der Unterschied zum Retentionsmodul 1 aus den Figuren 1 bis 6 besteht in der Verbindungsvorrichtung 8, welche kein Steckloch 9 in einem Lochkörper 10 aufweist. Ansonsten ist auf die Figuren 11 bis 14 die Beschreibung der Figuren 1 bis 6 anzuwenden.

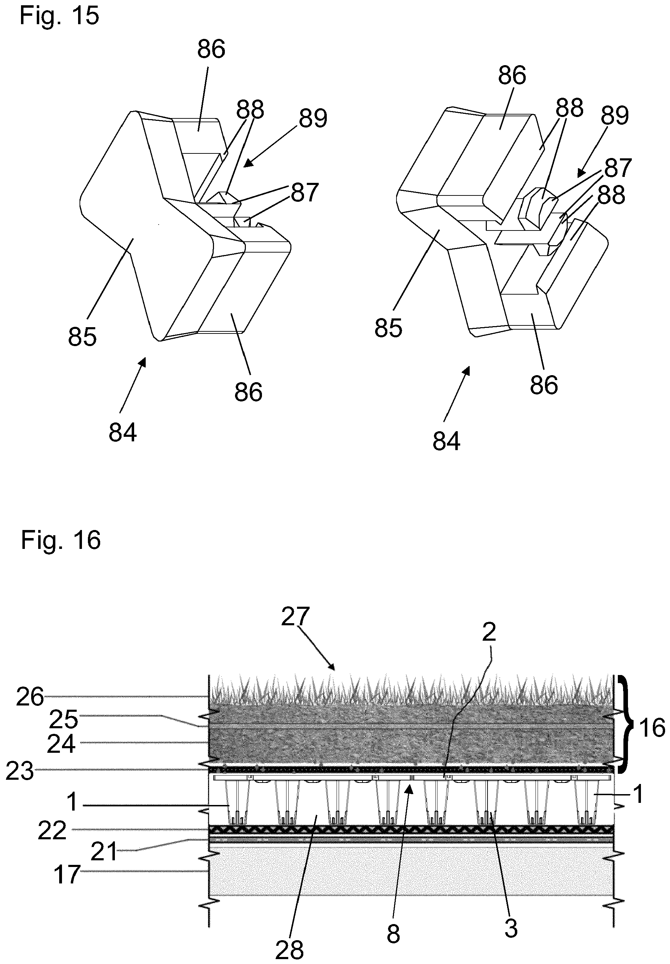

Die Retentionsmodule 1 aus den Figuren 11 bis 14 können mittels einem Befestigungselement 84 aus Fig. 15 aneinander befestigt werden.

Zusätzlich zum doppelt schwalbenschwanzförmigen Basisteil 85 weist das Befestigungselement 84 vier vom Basisteil 85 abstehende Halteteile 86, 87 jeweils mit einem Rasthaken 88 auf.

Insbesondere sind äußere Halteteile 86 jeweils an gegenüberliegenden Enden des Basisteils 85 angeordnet und zwei innere Halteteile 87 in einem Mittelbereich des Basisteils 85 angeordnet, wobei zwischen einem ersten äußeren Halteteil 86 und einem ersten inneren Halteteil 87 oder zwischen einem zweiten äußeren Halteteil 86 und einem zweiten inneren Halteteil 87 jeweils ein Retentionsmodul 1, insbesondere ein Rahmen 7, einrastbar ist. Stecklöcher 9 im Retentionsmodul 1 sind daher bei dieser Ausführungsform des Befestigungselements 84 nicht notwendig.

Die Fig. 16 zeigt eine Schnittdarstellung einer Oberflächenkonstruktion 27 auf einer Gebäudeoberfläche 17 mit zwei Retentionsmodulen 1 und einer Auflage 16. Insbesondere werden zwei Retentionsmodule 1 bei einer typischen Verwendung gezeigt.

Die Oberflächenkonstruktion 27 ist hier als Dachbegrünung ausgeformt.

Die Oberflächenkonstruktion 27 weist eine Anordnung aus mindestens zwei Retentionsmodulen 1, insbesondere nach den Figuren 1 bis 6 oder 11 bis 13, auf. Auf den Retentionsmodulen 1 ist eine Auflage 16, insbesondere eine Dachbegrünung, angeordnet.

Die Anordnung aus mindestens zwei Retentionsmodulen 1 liegt auf einer Gebäudeoberfläche 17, insbesondere auf einer auf der Gebäudeoberfläche 17 aufliegenden Schutzschicht 22, auf, sodass die Auflage 16 von der Gebäudeoberfläche 17 beabstandet ist. Dadurch wird für auf die Auflage 16 niedergehendes Wasser ein Retentionsspeicher 28 im Zwischenraum geschaffen. Zwischen der Gebäudeoberfläche 17 und der Schutzschicht 22 ist zudem eine wasserdichte Schicht 21 angeordnet, welche den Retentionsspeicher 28 nach unten begrenzt und Wasser am Eindringen in das Gebäude hindert.

Auf der Auflagefläche 2 der Anordnung aus mindestens zwei Retentionsmodulen 1 liegt eine Auflage 16 auf. Die Auflage 16 weist eine Filterschicht 23 auf, welche unmittelbar auf der Auflagefläche 2 aufliegt. Auf der Filterschicht 23 ist Substrat 24 als Nährboden für die Vegetation 26 angeordnet. Im Substrat 24 ist eine optionale Unterflurbewässerung 25 angeordnet. Die Filterschicht 23 hindert das Substrat 24 am Durchrieseln der Auflagefläche 2. Da die Filterschicht 23 aber wasserdurchlässig ausgebildet ist, kann Wasser in den Retentionsspeicher 28 tropfen.

Von der Anordnung aus mindestens zwei Retentionsmodulen 1 sind zwei Retentionsmodule 1 in Fig. 9 ersichtlich. Die beiden Retentionsmodule 1 sind über die mindestens eine Verbindungsvorrichtung 8 verbunden, insbesondere aneinander befestigt oder einander kontaktierend.

Zwischen den Stirnseiten 18 der mindestens zwei verbundenen Retentionsmodule 1 ist ein Spalt angeordnet, wobei der Spalt bei einer ersten Temperatur eine erste Breite aufweist und bei einer zweiten Temperatur eine zweite Breite aufweist, wobei die erste Breite von der zweiten Breite verschieden ist, wenn die erste Temperatur von der zweiten Temperatur verschieden ist. Eine Materialausdehnung oder -kontraktion der Retentionsmodule 1 aufgrund eines Temperaturunterschieds, insbesondere aufgrund eines Temperaturunterschiedes des Materials des Retentionsmoduls, kann demnach kompensiert werden. Der Spalt kann durch die Anschlagelemente 82 gebildet werden.

### Bezugszeichenliste:

- 1: Retentionsmodul
- 2: Auflagefläche
- 3: Abstandhalter
- 31: Pyramidenstumpf
- 32: Grundfläche
- 33: Deckfläche
- 34: Durchgangsöffnung
- 35: Verstärkungselement
- 36: Kante
- 37: Mantelfläche
- 38: Verstärkungsstrebe
- 4: Steg
- 5: Gitterstruktur
- 6: Polygon/Sechseck
- 61: offenes Polygon/Sechseck
- 62: geschlossenes Polygon/Sechseck
- 63: abgeschnittenes Polygon/Sechseck
- 7: Rahmen
- 8: Verbindungsvorrichtung
- 81: Ausgleichelement
- 82: Anschlagelement
- 83: Befestigungseinschnitt
- 84: Befestigungselement
- 85: Basisteil
- 86: äußeres Halteteil
- 87: inneres Halteteil
- 88: Rasthaken
- 89: Rastvorrichtung
- 9: Steckloch
- 10: Lochkörper
- 11: Stift
- 12: Steckvorrichtung
- 15: Anguss
- 16: Auflage
- 17: Gebäudeoberfläche
- 18: Stirnseite
- 19: Verbindungsscheibe
- 20: Absenkung der Stege
- 21: wasserdichte Schicht
- 22: Schutzschicht
- 23: Filterschicht
- 24: Substrat
- 25: Unterflurbewässerung
- 26: Vegetation
- 27: Oberflächenkonstruktion
- 28: Retentionsspeicher

## Patentansprüche

1. Retentionsmodul (1) zur Beabstandung einer Auflage (16), insbesondere einer Dachbegrünung, Kiesfläche und/oder Geh- und/oder Fahrbelag, von einer Gebäudeoberfläche (17), wobei das Retentionsmodul (1) mindestens eine der Auflage (16) zugewandte, insbesondere wasserdurchlässige, Auflagefläche (2) zum Auflegen der Auflage (16) aufweist, **dadurch gekennzeichnet, dass** eine Mehrzahl an Abstandhaltern (3) von der mindestens einen Auflagefläche (2) in eine von der Auflage (16) abgewandten Richtung absteht, vorzugweise wobei die Auflagefläche (2) von einem, bevorzugt durchgängigen und/oder rechteckigen, Rahmen (7) umgeben ist.

2. Retentionsmodul (1) nach dem vorhergehenden Anspruch, wobei an mindestens einer Stirnseite (18) des Retentionsmoduls (1), insbesondere am Rahmen (7), eine Verbindungsvorrichtung (8) zum, insbesondere lösbaren, Verbinden des Retentionsmoduls (1) mit einem weiteren Retentionsmodul (1) angeordnet oder anordenbar ist, vorzugsweise wobei die mindestens eine Verbindungsvorrichtung (8), insbesondere ausschließlich, in mindestens einem Berührungsabschnitt an das weitere Retentionsmodul (1) anlegbar ist, besonders bevorzugt wobei der mindestens eine Berührungsabschnitt weniger als ein Zehntel der Länge der mindestens einen Stirnseite (18) einnimmt.

3. Retentionsmodul (1) nach dem vorhergehenden Anspruch, wobei die Verbindungsvorrichtung (8) mindestens ein, insbesondere bewegliches, Ausgleichelement (81) zum Kompensieren einer Materialdehnung und/oder - kontraktion des Retentionsmoduls (1) umfasst, vorzugsweise wobei das mindestens eine Ausgleichelement (81)
- einen Ausgleichweg von mindestens 2 Millimeter, besonders bevorzugt größer gleich 3 Millimeter aufweist, und/oder
- als, besonders bevorzugt beidseitig befestigter, biegbarer Steg, insbesondere Blattfeder, ausgebildet ist, und/oder
- als ein verschmälerter Teil eines, insbesondere an der mindestens einen Stirnseite (18) angeordneten, Rahmens (7) des Retentionsmoduls (1) ausgebildet ist, und/oder
- eine rücktreibende Federkraft aufweist.

4. Retentionsmodul (1) nach dem vorhergehenden Anspruch, wobei das mindestens eine Ausgleichelement (81) mindestens ein über die mindestens eine Stirnseite (18) vorstehendes Anschlagelement (82) zum Anschlagen an das weitere Retentionsmodul (1) aufweist, welches sich vorzugsweise über den Berührungsabschnitt erstreckt und/oder welches vorzugweise stoffschlüssig mit dem Retentionsmodul (1), insbesondere mit dem Rahmen (7), verbunden ist, und/oder vorzugsweise wobei das mindestens eine Anschlagelement (82) als Betätigungselement des Ausgleichelements (81) fungiert.

5. Retentionsmodul (1) nach einem der Ansprüche 2 bis 4, wobei die Verbindungsvorrichtung (8) mindestens ein, insbesondere als separater Bauteil ausgeformtes, Befestigungselement (84) aufweist, vorzugsweise wobei das mindestens eine Befestigungselement (84) über eine Rastvorrichtung (89) und/oder eine Steckvorrichtung (12) an mindestens zwei Retentionsmodulen (1), insbesondere an deren Rahmen (7), formschlüssig und/oder kraftschlüssig befestigbar ist.

6. Retentionsmodul (1) nach dem vorhergehenden Anspruch, wobei mindestens ein Befestigungseinschnitt (83) am Retentionsmodul (1) vorgesehen ist, wobei das mindestens eine Befestigungselement (84) in den mindestens einen Befestigungseinschnitt (83) eingesetzt oder einsetzbar ist, vorzugsweise wobei
- der mindestens eine Befestigungseinschnitt (83) an wenigstens einem Rahmen (7) und/oder am wenigstens einen Ausgleichelement (81) und/oder am mindestens einen Anschlagelement (82) des Retentionsmoduls (1) angeordnet ist, und/oder
- sich die Breite des mindestens einen Befestigungseinschnitts (83) zur Auflagefläche (2) hin vergrößert.

7. Retentionsmodul (1) nach Anspruch 5 oder 6, wobei das mindestens eine Befestigungselement (84) einen, insbesondere an seinen gegenüberliegenden Enden schwalbenschwanzförmig erweiterten, Basisteil (85) aufweist, vorzugsweise wobei das mindestens eine Befestigungselement (84)
- mindestens zwei vom Basisteil (85) abstehende Stifte (11) aufweist, wobei die mindestens zwei Stifte (11) in ein Steckloch (9) des Retentionsmoduls (1) einsteckbar sind, besonders bevorzugt wobei die mindestens zwei Stifte (11) ein Übermaß in Bezug auf das Steckloch (9) aufweisen und/oder wobei die mindestens zwei Stifte (11) mindestens einen Rasthaken (88) aufweisen, und/oder
- mindestens zwei, insbesondere vier, vom Basisteil (85) abstehende Halteteile (86, 87) jeweils mit einem Rasthaken (88) aufweist, besonders bevorzugt wobei zwei äußere Halteteile (86) jeweils an gegenüberliegenden Enden des Basisteils (85) angeordnet sind und zwei innere Halteteile (87) in einem Mittelbereich des Basisteils (85) angeordnet sind, wobei zwischen einem ersten äußeren Halteteil (86) und einem ersten inneren Halteteil (87) und/oder zwischen einem zweiten äußeren Halteteil (86) und einem zweiten inneren Halteteil (87) jeweils ein Retentionsmodul (1), insbesondere ein Rahmen (7), einrastbar ist.

8. Retentionsmodul (1) nach einem der vorhergehenden Ansprüche, wobei die Abstandhalter (3) ausschließlich im Bereich der Auflagefläche (2) miteinander verbunden sind und/oder wobei mindestens ein Abstandhalter (3) der Mehrzahl an Abstandhalter (3) pyramidenstumpf-oder kegelstumpfförmig ausgebildet ist, vorzugsweise wobei
- eine Grundfläche (32) des mindestens einen Abstandhalters (3) in der Auflagefläche (2) angeordnet ist, besonders bevorzugt wobei die Grundfläche (32) offen ist, und/oder
- der mindestens eine Abstandhalter (3) im Bereich einer der mindestens einen Auflagefläche (2) abgewandten Deckfläche (33) mindestens eine Durchgangsöffnung (34) zum Abfließen von Wasser aufweist, und/oder
- der mindestens eine Abstandhalter (3) eine sich von der Grundfläche (32) zur Deckfläche (33) verjüngende Form aufweist, sodass zwei gleichartige Abstandhalter (3) und/oder Retentionsmodule (1) mit gleich angeordneten und gleichartigen Abstandhaltern (3) stapelbar sind, und/oder
- eine Grundfläche (32) und/oder eine Deckfläche (33) dreieckig, viereckig, sechseckig oder kreisförmig ausgebildet ist.

9. Retentionsmodul (1) nach dem vorhergehenden Anspruch, wobei der mindestens eine Abstandhalter (3) wenigstens ein von der pyramidenstumpf- oder kegelstumpfförmigen Form abweichendes, insbesondere nach innen gestülptes, Verstärkungselement (35) aufweist, vorzugsweise wobei
- der mindestens eine Abstandhalter (3) pyramidenstumpfförmig ausgebildet ist und das wenigstens eine Verstärkungselement (35) an wenigstens einer, vorzugsweise allen, Kanten (36) der Mantelfläche (37) des Pyramidenstumpfs (31) angeordnet ist, besonders bevorzugt wobei das wenigstens eine Verstärkungselement (35) eine der Krümmung der wenigstens einen Kante (36) entgegengesetzte Gegenkrümmung aufweist und/oder die wenigstens eine Kante (36) zumindest abschnittsweise ersetzt, und/oder
- das wenigstens eine Verstärkungselement (35) angrenzend an eine Deckfläche (33) des mindestens einen Abstandhalters (3) angeordnet ist, und/oder
- mindestens zwei, insbesondere vier oder sechs, Verstärkungselemente (35) rotationssymmetrisch angeordnet sind.

10. Retentionsmodul (1) nach dem vorhergehenden Anspruch, wobei mindestens zwei Verstärkungselemente (35) vorgesehen sind, wobei die mindestens zwei Verstärkungselemente (35) über mindestens eine Verstärkungsstrebe (38) miteinander verbunden sind, vorzugweise wobei
- die mindestens eine Verstärkungsstrebe (38) mit der Deckfläche (33) des mindestens einen Abstandhalters (3) verbunden ist, und/oder
- mindestens zwei in Bezug auf eine Zentralachse des mindestens einen Abstandhalters (3) gegenüberliegende Verstärkungselemente (35) über die mindestens eine Verstärkungsstrebe (38) verbunden sind, und/oder
- mindestens zwei, insbesondere drei, Verstärkungsstreben (38) vorgesehen sind, wobei die mindestens zwei, insbesondere drei, Verstärkungsstreben (38) von einer Zentralachse des mindestens einen Abstandhalters (3) sternförmig nach außen zu den Verstärkungselementen (35) laufen und/oder wobei die mindestens zwei, insbesondere drei, Verstärkungsstreben (38), insbesondere entlang einer Zentralachse des mindestens einen Abstandhalters (3), miteinander verbunden sind.

11. Retentionsmodul (1) nach einem der vorhergehenden Ansprüche, wobei die mindestens eine Auflagefläche (2) von einer Mehrzahl von miteinander verbundenen Stegen (4) aufgespannt wird, vorzugsweise wobei die Mehrzahl an Stegen (4) eine flächige Gitterstruktur (5) aus mehreren, insbesondere gleichförmigen, Polygonen (6) ausbildet, besonders bevorzugt wobei
- die Polygone (6) lückenlos und überlappungsfrei angeordnet sind, und/oder
- die Polygone (6) als Dreieck, Viereck oder Sechseck ausgebildet sind, und/oder
- zumindest ein Großteil der Polygone (6) der Gitterstruktur (5) offen sind, sodass Wasser durch die Polygone (6) fließen kann, und/oder
- mindestens ein Abstandhalter (3) der Mehrzahl an Abstandhalter (3) eine polygonale Grundfläche (32) aufweist, und insbesondere pyramidenstumpfförmig ausgebildet ist, und wobei die polygonale Grundfläche (32) von den Stegen (4), die ein Polygon (6) der Gitterstruktur (5) bilden, begrenzt wird.

12. Retentionsmodul (1) nach einem der vorhergehenden Ansprüche, wobei
- die Länge der mindestens einen Auflagefläche (2) 500 bis 1200, insbesondere rund 592, Millimeter beträgt, und/oder
- die Breite der mindestens einen Auflagefläche (2) 300 bis 800, insbesondere rund 396, Millimeter beträgt, und/oder
- die Höhe des mindestens einen Abstandhalters (3) 60 bis 200, insbesondere rund 60, 90 oder 150, Millimeter beträgt.

13. Retentionsmodul (1) nach einem der vorhergehenden Ansprüche, wobei das Retentionsmodul (1)
- zumindest teilweise, vorzugsweise zur Gänze, aus Polyolefinen gefertigt ist, und/oder
- mittels Spritzgießen hergestellt ist, und/oder
- einer Druckbelastung von 100, bevorzugt 500, besonders bevorzugt 800 Kilonewton pro Quadratmeter, insbesondere gemessen nach DIN 25619/2, aushält.

14. Anordnung aus mindestens zwei Retentionsmodulen (1), wobei mindestens ein Retentionsmodul (1) nach einem der Ansprüche 2 bis 13 ausgeformt ist, wobei die mindestens zwei Retentionsmodule (1) über die mindestens eine Verbindungsvorrichtung (8) verbunden sind, vorzugsweise wobei zwischen den Stirnseiten (18) der mindestens zwei verbundenen Retentionsmodule (1) ein Spalt angeordnet ist, wobei der Spalt bei einer ersten Temperatur eine erste Breite aufweist und bei einer zweiten Temperatur eine zweite Breite aufweist, wobei die erste Breite von der zweiten Breite verschieden ist, wenn die erste Temperatur von der zweiten Temperatur verschieden ist.

15. Oberflächenkonstruktion (27) aufweisend mindestens eine Anordnung aus mindestens zwei Retentionsmodulen (1) nach dem vorhergehenden Anspruch, wobei die Oberflächenkonstruktion (27) eine Auflage (16), insbesondere eine Dachbegrünung, eine Kiesfläche und/oder einen Geh- und/oder Fahrbelag aufweist, wobei die Anordnung aus mindestens zwei Retentionsmodulen (1) auf einer Gebäudeoberfläche (17), insbesondere auf einer auf der Gebäudeoberfläche (17) aufliegenden Schutzschicht (22), aufliegt, sodass die Auflage (16) von der Gebäudeoberfläche (17) beabstandet ist.

## Geänderte Patentansprüche

### Geänderte Patentansprüche gemäss Regel 137(2) EPÜ.

1. Retentionsmodul (1) zur Beabstandung einer Auflage (16), insbesondere einer Dachbegrünung, Kiesfläche und/oder Geh- und/oder Fahrbelag, von einer Gebäudeoberfläche (17), wobei das Retentionsmodul (1) mindestens eine der Auflage (16) zugewandte, insbesondere wasserdurchlässige, Auflagefläche (2) zum Auflegen der Auflage (16) aufweist, **dadurch gekennzeichnet, dass** eine Mehrzahl an Abstandhaltern (3) von der mindestens einen Auflagefläche (2) in eine von der Auflage (16) abgewandten Richtung absteht, vorzugweise wobei die Auflagefläche (2) von einem, bevorzugt durchgängigen und/oder rechteckigen, Rahmen (7) umgeben ist, wobei die mindestens eine Auflagefläche (2) eben ausgebildet und von einer Mehrzahl von miteinander verbundenen Stegen (4) aufgespannt ist.

2. Retentionsmodul (1) nach dem vorhergehenden Anspruch, wobei an mindestens einer Stirnseite (18) des Retentionsmoduls (1), insbesondere am Rahmen (7), eine Verbindungsvorrichtung (8) zum, insbesondere lösbaren, Verbinden des Retentionsmoduls (1) mit einem weiteren Retentionsmodul (1) angeordnet oder anordenbar ist, vorzugsweise wobei die mindestens eine Verbindungsvorrichtung (8), insbesondere ausschließlich, in mindestens einem Berührungsabschnitt an das weitere Retentionsmodul (1) anlegbar ist, besonders bevorzugt wobei der mindestens eine Berührungsabschnitt weniger als ein Zehntel der Länge der mindestens einen Stirnseite (18) einnimmt.

3. Retentionsmodul (1) nach dem vorhergehenden Anspruch, wobei die Verbindungsvorrichtung (8) mindestens ein, insbesondere bewegliches, Ausgleichelement (81) zum Kompensieren einer Materialdehnung und/oder - kontraktion des Retentionsmoduls (1) umfasst, vorzugsweise wobei das mindestens eine Ausgleichelement (81)
- einen Ausgleichweg von mindestens 2 Millimeter, besonders bevorzugt größer gleich 3 Millimeter aufweist, und/oder
- als, besonders bevorzugt beidseitig befestigter, biegbarer Steg, insbesondere Blattfeder, ausgebildet ist, und/oder
- als ein verschmälerter Teil eines, insbesondere an der mindestens einen Stirnseite (18) angeordneten, Rahmens (7) des Retentionsmoduls (1) ausgebildet ist, und/oder
- eine rücktreibende Federkraft aufweist.

4. Retentionsmodul (1) nach dem vorhergehenden Anspruch, wobei das mindestens eine Ausgleichelement (81) mindestens ein über die mindestens eine Stirnseite (18) vorstehendes Anschlagelement (82) zum Anschlagen an das weitere Retentionsmodul (1) aufweist, welches sich vorzugsweise über den Berührungsabschnitt erstreckt und/oder welches vorzugweise stoffschlüssig mit dem Retentionsmodul (1), insbesondere mit dem Rahmen (7), verbunden ist, und/oder vorzugsweise wobei das mindestens eine Anschlagelement (82) als Betätigungselement des Ausgleichelements (81) fungiert.

5. Retentionsmodul (1) nach einem der Ansprüche 2 bis 4, wobei die Verbindungsvorrichtung (8) mindestens ein, insbesondere als separater Bauteil ausgeformtes, Befestigungselement (84) aufweist, vorzugsweise wobei das mindestens eine Befestigungselement (84) über eine Rastvorrichtung (89) und/oder eine Steckvorrichtung (12) an mindestens zwei Retentionsmodulen (1), insbesondere an deren Rahmen (7), formschlüssig und/oder kraftschlüssig befestigbar ist.

6. Retentionsmodul (1) nach dem vorhergehenden Anspruch, wobei mindestens ein Befestigungseinschnitt (83) am Retentionsmodul (1) vorgesehen ist, wobei das mindestens eine Befestigungselement (84) in den mindestens einen Befestigungseinschnitt (83) eingesetzt oder einsetzbar ist, vorzugsweise wobei
- der mindestens eine Befestigungseinschnitt (83) an wenigstens einem Rahmen (7) und/oder am wenigstens einen Ausgleichelement (81) und/oder am mindestens einen Anschlagelement (82) des Retentionsmoduls (1) angeordnet ist, und/oder
- sich die Breite des mindestens einen Befestigungseinschnitts (83) zur Auflagefläche (2) hin vergrößert.

7. Retentionsmodul (1) nach Anspruch 5 oder 6, wobei das mindestens eine Befestigungselement (84) einen, insbesondere an seinen gegenüberliegenden Enden schwalbenschwanzförmig erweiterten, Basisteil (85) aufweist, vorzugsweise wobei das mindestens eine Befestigungselement (84)
- mindestens zwei vom Basisteil (85) abstehende Stifte (11) aufweist, wobei die mindestens zwei Stifte (11) in ein Steckloch (9) des Retentionsmoduls (1) einsteckbar sind, besonders bevorzugt wobei die mindestens zwei Stifte (11) ein Übermaß in Bezug auf das Steckloch (9) aufweisen und/oder wobei die mindestens zwei Stifte (11) mindestens einen Rasthaken (88) aufweisen, und/oder
- mindestens zwei, insbesondere vier, vom Basisteil (85) abstehende Halteteile (86, 87) jeweils mit einem Rasthaken (88) aufweist, besonders bevorzugt wobei zwei äußere Halteteile (86) jeweils an gegenüberliegenden Enden des Basisteils (85) angeordnet sind und zwei innere Halteteile (87) in einem Mittelbereich des Basisteils (85) angeordnet sind, wobei zwischen einem ersten äußeren Halteteil (86) und einem ersten inneren Halteteil (87) und/oder zwischen einem zweiten äußeren Halteteil (86) und einem zweiten inneren Halteteil (87) jeweils ein Retentionsmodul (1), insbesondere ein Rahmen (7), einrastbar ist.

8. Retentionsmodul (1) nach einem der vorhergehenden Ansprüche, wobei die Abstandhalter (3) ausschließlich im Bereich der Auflagefläche (2) miteinander verbunden sind und/oder wobei mindestens ein Abstandhalter (3) der Mehrzahl an Abstandhalter (3) pyramidenstumpf- oder kegelstumpfförmig ausgebildet ist, vorzugsweise wobei
- eine Grundfläche (32) des mindestens einen Abstandhalters (3) in der Auflagefläche (2) angeordnet ist, besonders bevorzugt wobei die Grundfläche (32) offen ist, und/oder
- der mindestens eine Abstandhalter (3) im Bereich einer der mindestens einen Auflagefläche (2) abgewandten Deckfläche (33) mindestens eine Durchgangsöffnung (34) zum Abfließen von Wasser aufweist, und/oder
- der mindestens eine Abstandhalter (3) eine sich von der Grundfläche (32) zur Deckfläche (33) verjüngende Form aufweist, sodass zwei gleichartige Abstandhalter (3) und/oder Retentionsmodule (1) mit gleich angeordneten und gleichartigen Abstandhaltern (3) stapelbar sind, und/oder
- eine Grundfläche (32) und/oder eine Deckfläche (33) dreieckig, viereckig, sechseckig oder kreisförmig ausgebildet ist.

9. Retentionsmodul (1) nach dem vorhergehenden Anspruch, wobei der mindestens eine Abstandhalter (3) wenigstens ein von der pyramidenstumpf- oder kegelstumpfförmigen Form abweichendes, insbesondere nach innen gestülptes, Verstärkungselement (35) aufweist, vorzugsweise wobei
- der mindestens eine Abstandhalter (3) pyramidenstumpfförmig ausgebildet ist und das wenigstens eine Verstärkungselement (35) an wenigstens einer, vorzugsweise allen, Kanten (36) der Mantelfläche (37) des Pyramidenstumpfs (31) angeordnet ist, besonders bevorzugt wobei das wenigstens eine Verstärkungselement (35) eine der Krümmung der wenigstens einen Kante (36) entgegengesetzte Gegenkrümmung aufweist und/oder die wenigstens eine Kante (36) zumindest abschnittsweise ersetzt, und/oder
- das wenigstens eine Verstärkungselement (35) angrenzend an eine Deckfläche (33) des mindestens einen Abstandhalters (3) angeordnet ist, und/oder
- mindestens zwei, insbesondere vier oder sechs, Verstärkungselemente (35) rotationssymmetrisch angeordnet sind.

10. Retentionsmodul (1) nach dem vorhergehenden Anspruch, wobei mindestens zwei Verstärkungselemente (35) vorgesehen sind, wobei die mindestens zwei Verstärkungselemente (35) über mindestens eine Verstärkungsstrebe (38) miteinander verbunden sind, vorzugweise wobei
- die mindestens eine Verstärkungsstrebe (38) mit der Deckfläche (33) des mindestens einen Abstandhalters (3) verbunden ist, und/oder
- mindestens zwei in Bezug auf eine Zentralachse des mindestens einen Abstandhalters (3) gegenüberliegende Verstärkungselemente (35) über die mindestens eine Verstärkungsstrebe (38) verbunden sind, und/oder
- mindestens zwei, insbesondere drei, Verstärkungsstreben (38) vorgesehen sind, wobei die mindestens zwei, insbesondere drei, Verstärkungsstreben (38) von einer Zentralachse des mindestens einen Abstandhalters (3) sternförmig nach außen zu den Verstärkungselementen (35) laufen und/oder wobei die mindestens zwei, insbesondere drei, Verstärkungsstreben (38), insbesondere entlang einer Zentralachse des mindestens einen Abstandhalters (3), miteinander verbunden sind.

11. Retentionsmodul (1) nach einem der vorhergehenden Ansprüche, wobei die Mehrzahl an Stegen (4) eine flächige Gitterstruktur (5) aus mehreren, insbesondere gleichförmigen, Polygonen (6) ausbildet, bevorzugt wobei
- die Polygone (6) lückenlos und überlappungsfrei angeordnet sind, und/oder
- die Polygone (6) als Dreieck, Viereck oder Sechseck ausgebildet sind, und/oder
- zumindest ein Großteil der Polygone (6) der Gitterstruktur (5) offen sind, sodass Wasser durch die Polygone (6) fließen kann, und/oder
- mindestens ein Abstandhalter (3) der Mehrzahl an Abstandhalter (3) eine polygonale Grundfläche (32) aufweist, und insbesondere pyramidenstumpfförmig ausgebildet ist, und wobei die polygonale Grundfläche (32) von den Stegen (4), die ein Polygon (6) der Gitterstruktur (5) bilden, begrenzt wird.

12. Retentionsmodul (1) nach einem der vorhergehenden Ansprüche, wobei
- die Länge der mindestens einen Auflagefläche (2) 500 bis 1200, insbesondere rund 592, Millimeter beträgt, und/oder
- die Breite der mindestens einen Auflagefläche (2) 300 bis 800, insbesondere rund 396, Millimeter beträgt, und/oder
- die Höhe des mindestens einen Abstandhalters (3) 60 bis 200, insbesondere rund 60, 90 oder 150, Millimeter beträgt.

13. Retentionsmodul (1) nach einem der vorhergehenden Ansprüche, wobei das Retentionsmodul (1)
- zumindest teilweise, vorzugsweise zur Gänze, aus Polyolefinen gefertigt ist, und/oder
- mittels Spritzgießen hergestellt ist, und/oder
- einer Druckbelastung von 100, bevorzugt 500, besonders bevorzugt 800 Kilonewton pro Quadratmeter, insbesondere gemessen nach DIN 25619/2, aushält.

14. Anordnung aus mindestens zwei Retentionsmodulen (1), wobei mindestens ein Retentionsmodul (1) nach einem der Ansprüche 2 bis 13 ausgeformt ist, wobei die mindestens zwei Retentionsmodule (1) über die mindestens eine Verbindungsvorrichtung (8) verbunden sind, vorzugsweise wobei zwischen den Stirnseiten (18) der mindestens zwei verbundenen Retentionsmodule (1) ein Spalt angeordnet ist, wobei der Spalt bei einer ersten Temperatur eine erste Breite aufweist und bei einer zweiten Temperatur eine zweite Breite aufweist, wobei die erste Breite von der zweiten Breite verschieden ist, wenn die erste Temperatur von der zweiten Temperatur verschieden ist.

15. Oberflächenkonstruktion (27) aufweisend mindestens eine Anordnung aus mindestens zwei Retentionsmodulen (1) nach dem vorhergehenden Anspruch, wobei die Oberflächenkonstruktion (27) eine Auflage (16), insbesondere eine Dachbegrünung, eine Kiesfläche und/oder einen Geh- und/oder Fahrbelag aufweist, wobei die Anordnung aus mindestens zwei Retentionsmodulen (1) auf einer Gebäudeoberfläche (17), insbesondere auf einer auf der Gebäudeoberfläche (17) aufliegenden Schutzschicht (22), aufliegt, sodass die Auflage (16) von der Gebäudeoberfläche (17) beabstandet ist.
